(19)

**Europäisches Patentamt**

**European Patent Office**

**Office européen des brevets**

(11) **EP 4 119 688 A1**

(12) **EUROPEAN PATENT APPLICATION**
published in accordance with Art. 153(4) EPC

(43) Date of publication:
**18.01.2023 Bulletin 2023/03**

(21) Application number: **21767247.6**

(22) Date of filing: **12.03.2021**

(51) International Patent Classification (IPC):
**C22C 38/00** (2006.01)   **C21D 8/02** (2006.01)
**C22C 38/58** (2006.01)

(52) Cooperative Patent Classification (CPC):
**C21D 8/02; C22C 38/00; C22C 38/58;** Y02E 10/72

(86) International application number:
**PCT/JP2021/010109**

(87) International publication number:
**WO 2021/182618 (16.09.2021 Gazette 2021/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.03.2020   JP 2020044280**

(71) Applicant: **NIPPON STEEL CORPORATION**
**Chiyoda-ku**
**Tokyo 100-8071 (JP)**

(72) Inventors:
• **SHIRAISHI, Ryotaro**
  **Tokyo 100-8071 (JP)**
• **SUMIYA, Satoshi**
  **Tokyo 100-8071 (JP)**
• **SHINOHARA, Yasuhiro**
  **Tokyo 100-8071 (JP)**

(74) Representative: **Zimmermann & Partner**
**Patentanwälte mbB**
**Postfach 330 920**
**80069 München (DE)**

(54) **STEEL SHEET FOR WIND POWER GENERATION PLANTS AND METHOD FOR PRODUCING SAME**

(57)   A steel plate for wind power generation plants, which has a predetermined chemical composition, and in which, when a plate thickness is set as t in units of mm, a microstructure at a depth position of t/4 from the surface is composed of, in area proportion, ferrite: 50 to 80%, bainite: 20 to 50% and other structures: 0 to 1.0%, wherein an average crystal grain size of the ferrite is 25.0 to 50.0 $\mu$m, wherein the porosity volume at a depth position of t/2 from the surface is $0.20 \times 10^{-3}$ cm$^3$/g or less, and wherein the plate thickness is 60 mm or more and the plate width is 3,000 mm or more.

**EP 4 119 688 A1**

## Description

[Technical Field]

The present invention relates to a steel plate for wind power generation plants and a method for producing the same.

Priority is claimed on Japanese Patent Application No. 2020-44280, filed March 13, 2020, the content of which is incorporated herein by reference.

[Background Art]

Various attempts to conserve the global environment by switching to power generation using clean energy sources from power generation using fossil fuels which emit a large amount of $CO_2$ emissions as energy sources and reducing the generation of the greenhouse gas carbon dioxide ($CO_2$) have been performed. Wind power generation is one type of clean energy power generation, and wind power generation plants are already in operation in various places in Japan. Wind power generation has an advantage of relatively low power generation cost, but has a disadvantage of an output that is not stable due to the force of the wind, and the sound generated by the rotation of blades (power generation blades) and also has a disadvantage of causing noise pollution for nearby residents.

Therefore, in the future, it is expected that installation locations of wind power generation plants will move offshore where strong winds can be easily obtained stably, noise pollution is not caused, and a wide installation area can be secured, instead of on land where many plants are currently installed. When the installation location is offshore, excellent corrosion resistance in the offshore corrosive environment is required. Patent Documents 1 to 4 propose corrosion resistant steel plates that can be used even in a severe corrosive environment with sea salt in the air as steel plates mainly used for wind power generation plants (wind power generation tower) used offshore.

In addition, in wind power generation, as the power generation amount in each wind power generation plant becomes larger, the power generation cost becomes lower. Since the power generation amount obtained by wind power is proportional to the cube of the wind speed and the square of the blade diameter, it is expected that the diameters of blades in wind power generation plants will be large, and plants will become larger in the future.

When the size of a wind power generation plant is larger, a thicker steel plate is required as the material for the steel plate. For example, Patent Document 5 and Patent Document 6 propose steels for electron beam welding having a plate thickness of more than 50 mm used in wind power generation plants (steel towers for wind power generation plants). In the inventions described in Patent Document 5 and Patent Document 6, welding is performed with an electron beam in consideration of easy and highly efficient assembly on the coast near construction sites.

[Citation List]

[Patent Document]

[Patent Document 1]
Japanese Unexamined Patent Application, First Publication No. 2012-122116
[Patent Document 2]
Japanese Unexamined Patent Application, First Publication No. 2012-122117
[Patent Document 3]
Japanese Unexamined Patent Application, First Publication No. 2013-28852
[Patent Document 4]
Japanese Unexamined Patent Application, First Publication No. 2013-43579
[Patent Document 5]
Japanese Unexamined Patent Application, First Publication No. 2011-246805
[Patent Document 6]
Japanese Unexamined Patent Application, First Publication No. 2011-246807

[Summary of the Invention]

[Problems to be Solved by the Invention]

As described above, Patent Documents 1 to 6 disclose steel plates for wind power generation plants. However, the steel plates described in Patent Documents 1 to 4 are required to contain 0.03% or more or 0.50% or more of W. W is an element that impairs weldability. Therefore, the steel plates described in Patent Documents 1 to 4 are not preferable as steel used in large plants in which welding is required. In addition, in Patent Documents 1 to 4, a steel plate having a plate thickness of more than 50 mm is not described. In consideration of the trend toward larger wind power generation plants in the future, thick steel plates having a thicker plate thickness are required.

On the other hand, Patent Documents 5 and 6 describe steel plates having a plate thickness of more than 50 mm. However, it is assumed that electron beam welding is used for the steel described in Patent Documents 5 and 6. Electron beam welding is a relatively new welding method, and it cannot be said that it is sufficiently widespread.

In order to improve workability on the assumption of a general welding method (submerged arc welding method, etc.) used when wind power generation plants are constructed, it is necessary to widen the steel plate and reduce welding. Specifically, when the plate width of the steel plate is set to 3,000 mm or more, it is expected that the workability will be significantly improved compared to the conventional method. However, when wide steel plates are produced in general production facilities, the amount of reduction per pass becomes small, void defects (porosity) present in the slab cannot be compressed, and the mechanical strength of the steel plate deteriorates. In addition, since the total amount of reduction from the slab becomes smaller as the plate thickness becomes thicker, compression of the porosity tends to be insufficient.

The present invention has been made in view of the above circumstances, and an object of the present invention is to provide a steel plate for wind power generation plants, which has the basic performance required for a steel plate for wind power generation plants, that is, excellent low-temperature toughness and high strength, and has a plate thickness of 60 mm or more and a plate width of 3,000 mm or more, and a method for producing the same.

[Means for Solving the Problem]

First, the inventors have studied details of a method for producing a steel plate having excellent low-temperature toughness and high strength and having a plate thickness of 60 mm or more and a plate width of 3,000 mm or more on the assumption of a chemical composition which allows characteristics required for wind power generation to be exhibited, and found the following.

(1) In order to obtain a steel plate having a plate thickness of 60 mm or more and a plate width of 3,000 mm or more, it is necessary to increase the width of the slab to be subjected to the rolling process. If the width of the slab increases, the contact area between the rolling roll and the slab increases, and a reaction force from the slab increases. Since a rolling mill has a reaction resistance constraint, if the reaction force is large, it is necessary to reduce the amount of reduction per pass and perform rolling at a reaction force equal to or lower than the reaction force that the rolling mill can withstand. However, if the amount of reduction per pass is reduced, it becomes difficult to compress the porosity formed in the slab, which causes internal defects of the obtained steel plate.

(2) In order to increase the amount of reduction per pass, it is effective to raise the temperature during rolling to as high as possible, that is, the slab heating temperature is raised. Thereby, the thermal deformation resistance can be reduced, and the reduction amount can increase, and thus the porosity in the slab can be easily compressed. However, if the slab heating temperature is raised, since crystal grains of the structure of the obtained steel plate become coarse and this may be a factor in causing toughness to deteriorate, it is necessary to avoid raising the slab heating temperature.

(3) If the slab heating temperature is lowered to restrict growth of initial austenite grains, the temperature during rolling is a temperature in an austenite un-recrystallized region and closer to the upper limit of the austenite un-recrystallized region, and rolling is performed with a shape ratio of 0.50 or more, the crystal grain size of the steel plate can thus be controlled to be a certain value or less. In addition, at the same time, according to such rolling, the porosity can be compressed, and the porosity volume can be reduced even if the steel plate has a plate thickness of 60 mm or more and a plate width of 3,000 mm or more.

(4) The porosity can be compressed and reduced by the above rolling, but in order to further reduce the porosity, it is preferable to reduce the porosity from the stage of producing a slab which is a raw material of the steel plate. Specifically, it is preferable to reduce the casting speed during continuous casting of the molten steel, increase the reduction amount in the end stage of solidification, and reduce the porosity when the slab is completed.

The present invention has been made based on the above findings, and provides the following [1] to [5].

[1] A steel plate for wind power generation plants according to one aspect of the present invention, which has a chemical composition, in mass%, C: 0.05 to 0.10%, Si: 0.10 to 0.45%, Mn: 1.20 to 1.60%, P: 0.020% or less, S: 0.005% or less, Cu: 0.10 to 0.50%, Ni: 0.10 to 0.50%, Ti: 0.003 to 0.040%, Al: 0.010 to 0.060%, Nb: 0.010 to 0.040%, Cr: 0 to 0.40%, Mo: 0 to 0.15%, V: 0 to 0.15%, B: 0 to 0.0020%, Ca: 0 to 0.0100%, Mg: 0 to 0.0100%, REM: 0 to 0.0100%, N: 0.006% or less, O: 0.010% or less, and the remainder: Fe and impurities, and in which, when a plate thickness is set as t in units of mm, a microstructure at a depth position of t/4 from the surface is composed of, in area proportion, ferrite: 50 to 80%, bainite: 20 to 50%, and other structures: 0 to 1.0%, wherein an average crystal grain size of the ferrite is 25.0 to 50.0 $\mu$m, wherein the porosity volume at a depth position of t/2 from the surface is $0.20 \times 10^{-3}$ cm$^3$/g or less, and wherein the plate thickness is 60 mm or more and the plate width is 3,000 mm or more.

[2] The steel plate for wind power generation plants according to [1], wherein the chemical composition may include, in mass%, one or more selected from the group consisting of Cr: 0.10 to 0.40%, Mo: 0.02 to 0.15%, V: 0.02 to 0.15%, B: 0.0001 to 0.0020%, Ca: 0.0005 to 0.0100%, Mg: 0.0005 to 0.0100%, and REM: 0.0005 to 0.0100%.

[3] The steel plate for wind power generation plants according to [1] or [2], wherein the tensile strength may be 440 MPa or more and 599 MPa or less.

[4] A method for producing a steel plate for wind power generation plants according to another aspect of the present invention is a method for producing the steel plate for wind power generation plants according to any one of [1] to [3], including a continuous casting process in which a slab having a thickness of ts and a porosity volume of $1.0 \times 10^{-3}$ cm$^3$/g or less at a depth position of ts/2 from the surface is obtained by continuous casting; a rough rolling process in which the slab is heated to 1,020 to 1,070°C, and the heated slab is roughly rolled to obtain a rough-rolled slab; a finish rolling process in which the rough-rolled slab is subjected to a plurality of passes of finish rolling including one or more passes under the condition that a surface temperature is 800°C or higher in an austenite un-recrystallized region and under the condition that the shape ratio is 0.50 or more to obtain a steel plate; a water cooling process in which the steel plate is cooled with water such that a surface temperature drops from a temperature of 800°C or higher to a temperature of 300 to 400°C; and a cutting process in which the steel plate after the water cooling process is cut out so that a plate width is 3,000 mm or more.

[5] The method for producing a steel plate for wind power generation plants according to [4], wherein, in the continuous casting process, the slab containing an unsolidified part may be subjected to a reduction of 3 mm or more and 30 mm or less with a solid phase ratio of the center part in a range of 0.75 or more and less than 1.0 using a reducing rolling.

[Effects of the Invention]

According to the above aspects of the present invention, it is possible to provide a steel plate for wind power generation plants, which has excellent low-temperature toughness and high strength and has a plate thickness of 60 mm or more and a plate width of 3,000 mm or more, and a method for producing the same.

[Embodiment(s) of the Invention]

1. Steel plate for wind power generation plants

Hereinafter, a steel plate for wind power generation plants according to one embodiment of the present invention (steel plate for wind power generation plants according to the present embodiment) will be described. In the chemical composition, the content "%" of each element indicates "mass%." In addition, the range indicated by "a to b" includes values at both ends as a lower limit value and an upper limit value. That is, 0.05 to 0.10% indicates a range of 0.05% or more and 0.10% or less.

Steel plates for wind power generation plants include not only steel plates used for towers for wind power generation but also steel plates used as the foundation of the towers.

(Chemical composition)

C: 0.05 to 0.10%

C is an element that is extremely effective for increasing the strength of steel. If the content thereof is less than 0.05%, a desired strength cannot be secured, the structure is insufficiently refined, and the low-temperature toughness deteriorates. Therefore, the C content is set to 0.05% or more. The C content is preferably 0.06% or more.

On the other hand, if the C content exceeds 0.10%, locally hardened parts are formed in steel, and the toughness deteriorates. Therefore, the C content is set to 0.10% or less. The C content is preferably 0.09% or less.

Si: 0.10 to 0.45%

Si is an element required as a deoxidizing material in the deoxidizing process. In addition, Si is an element effective for improving the strength. In order to obtain a sufficient deoxidizing effect and a strength improving effect, the Si content is set to 0.10% or more. The Si content is preferably 0.15% or more.

On the other hand, if the Si content exceeds 0.45%, mixed martensite and austenite (MA) is locally formed in steel, and the toughness deteriorates. Therefore, the Si content is set to 0.45% or less. The Si content is preferably 0.40% or less.

Mn: 1.20 to 1.60%

Mn is an element that improves the hardenability of steel and improves the strength and toughness of steel. If the Mn content is less than 1.20%, these effects cannot be obtained. Therefore, the Mn content is set to 1.20% or more. The Mn content is preferably 1.25% or more.

On the other hand, if the Mn content exceeds 1.60%, the hardness increases as the strength of steel increases, and the toughness deteriorates. Therefore, the Mn content is set to 1.60% or less. The Mn content is preferably 1.57% or less.

P: 0.020% or less

P is an element that is generally contained as impurities in steel. If the P content exceeds 0.020%, P segregates at the grain boundaries, and the HAZ toughness greatly deteriorates. Therefore, the P content is set to 0.020% or less. The P content is preferably reduced as much as possible, but in consideration of the productivity, the P content is generally 0.001% or more.

S: 0.005% or less

S is an element that is generally contained as impurities in steel, and is an element that bonds to Mn in steel to form MnS and deteriorates the low-temperature toughness and ductility of steel. Therefore, the S content is set to 0.005% or less. The S content is preferably reduced as much as possible, but in consideration of the productivity, the S content is generally 0.001% or more.

Cu: 0.10 to 0.50%

Ni: 0.10 to 0.50%

Cu and Ni are elements that can increase the strength without adversely affecting the toughness. Therefore, each element is contained in an amount of 0.10% or more. The Cu content and the Ni content are preferably 0.15% or more.

On the other hand, if the Cu content exceeds 0.50%, Cu segregates at the grain boundaries and causes grain boundary cracking. In addition, if the Ni content exceeds 0.50%, scale becomes thick at the interface of the base material during scale formation, and the detachability between the base and the scale deteriorates, which causes slab cracking. Therefore, the content of each element is set to 0.50% or less. The Cu content and the Ni content are preferably 0.45% or less.

Ti: 0.003 to 0.040%

Ti is an element that bonds to N in steel to form TiN and reduces inclusions such as AlN (improves cleanliness) which cause slab surface and steel surface cracking. In addition, Ti is an element that suppresses coarsening of austenite crystal grains and has an effect of increasing the strength of steel. In order to obtain such an effect, the Ti content is set to 0.003% or more. The Ti content is preferably 0.010% or more.

On the other hand, if the Ti content exceeds 0.040%, the precipitate may become coarse, and the toughness of the base material may deteriorate. Therefore, the Ti content is set to 0.040% or less. The Ti content is preferably 0.038% or less.

Al: 0.010 to 0.060%

Al is an element that acts as a deoxidizing agent and is most commonly used in a molten steel deoxidizing process. In addition, Al is an element having an effect of suppressing coarsening of crystal grains by fixing solid solution N in steel to form AlN. If the Al content is less than 0.010%, these effects cannot be obtained. Therefore, the Al content is set to 0.010% or more. The Al content is preferably 0.015% or more.

On the other hand, if the Al content exceeds 0.060%, Al is mixed with a welded metal during welding, and the toughness of the welded metal deteriorates. Therefore, the Al content is set to 0.060% or less. The Al content is preferably 0.055% or less.

Nb: 0.010 to 0.040%

Nb is an element effective for extending an austenite un-recrystallized region, and is an element that contributes to refinement of crystal grains and improves the strength and toughness. Therefore, the Nb content is set to 0.010% or more. The Nb content is preferably 0.015% or more.

On the other hand, if the Nb content exceeds 0.040%, coarse carbides are formed and the toughness decreases. Therefore, the Nb content is set to 0.040% or less. The Nb content is preferably 0.038% or less.

N: 0.006% or less

N is an element that is generally contained as impurities. If the N content exceeds 0.006%, N segregates at the grain boundaries, the nitride becomes coarse, and the toughness decreases. Therefore, the N content is set to 0.006% or less. The N content is preferably reduced as much as possible, but in consideration of the productivity, the N content is generally 0.002% or more.

O: 0.010% or less

O is an element that is generally contained as impurities. If the O content exceeds 0.010%, it is easy to form a coarse oxide that can be a fracture starting point. Therefore, the O content is set to 0.010% or less. A smaller O content is more preferable, but in consideration of the productivity, the O content is generally 0.001% or more.

Basically, the chemical composition of the steel plate for wind power generation plants according to the present embodiment contains the above elements in the specified ranges, with the remainder being Fe and impurities.

However, the chemical composition of the steel plate for wind power generation plants according to the present embodiment may include one or more selected from the group consisting of Cr: 0.40% or less, Mo: 0.15% or less, V: 0.15% or less, B: 0.0020% or less, Ca: 0.0100% or less, Mg: 0.0100% or less and REM: 0.0100% or less, in place of some of Fe. Hereinafter, the reasons for limiting these elements will be described. Since these elements do not necessarily have to be contained, the lower limit is 0%.

Impurities are components that are mixed in as raw materials such as ores and scrap, and other factors when steels are industrially produced.

Cr: 0 to 0.40%

Cr is an element that suppresses ferrite transformation and improves hardenability, and is an element effective for improving the strength. Therefore, Cr may be contained. In order to obtain such effects, the Cr content is preferably 0.10% or more. The Cr content is more preferably 0.15% or more.

On the other hand, if the Cr content exceeds 0.40%, the toughness of steel deteriorates. Therefore, the Cr content is set to 0.40% or less. The Cr content is preferably 0.35% or less.

Mo: 0 to 0.15%

Mo is an element that improves the hardenability of steel and contributes to improving the strength of the base material. Therefore, Mo may be contained. In order to obtain this effect, the Mo content is preferably 0.02% or more. The Mo content is more preferably 0.03% or more.

On the other hand, if the Mo content is excessive, the weldability significantly deteriorates. Therefore, the Mo content is set to 0.15% or less. The Mo content is preferably 0.10% or less.

V: 0 to 0.15%

V is an element that forms a carbonitride and has an effect of strengthening steel by precipitating. Therefore, V may be contained. In order to obtain this effect, the V content is preferably 0.02% or more. The V content is more preferably 0.05% or more.

On the other hand, if the V content is excessive, the effect is saturated and the economic rationality deteriorates. Therefore, the V content is set to 0.15% or less. The V content is preferably 0.13% or less.

B: 0 to 0.0020%

B is an element that improves the hardenability of steel and contributes to improving the strength of the base material. Therefore, B may be contained. In order to obtain this effect, the B content is preferably 0.0001% or more. The B content is more preferably 0.0004% or more.

On the other hand, if the B content is excessive, ferrite grains are significantly refined, and the weldability significantly deteriorates. Therefore, the B content is set to 0.0020% or less. The B content is preferably 0.0018% or less.

Ca: 0 to 0.0100%
Mg: 0 to 0.0100%
REM: 0 to 0.0100%

Ca, Mg and REM are elements that produce oxides or sulfides which form precipitation nuclei of intragranular ferrite. In addition, Ca, Mg and REM are elements that control the form of sulfides and improve low-temperature toughness. Therefore, these may be contained. In order to obtain such effects, the Ca content, the Mg content and the REM content are preferably 0.0005% or more. On the other hand, if Ca, Mg and REM are excessively contained, large Ca and Mg inclusions or clusters are formed, and the cleanliness of steel deteriorates. Therefore, the Ca content, the Mg content and the REM content are set to 0.0100% or less.

Here, REM is a general term for 17 elements including scandium (Sc) having an atomic number of 21, yttrium (Y) having an atomic number of 39, and the lanthanoids, that is, lanthanum (La) having an atomic number of 57 to lutetium (Lu) having an atomic number of 71, and the REM content is a total content of these elements.

(Microstructure)

The microstructure of the steel plate for wind power generation plants according to the present embodiment is a mixed structure of ferrite and bainite in order to achieve both high strength and high toughness. For the microstructure, a microstructure at a depth position of t/4 (t: plate thickness) from the surface, which is the average structure of the entire steel plate, is observed. In addition, "%" for the microstructure indicates "area%."

Ferrite: 50 to 80%
Bainite: 20 to 50%
Other structures: 0 to 1.0%

In order to improve the toughness of the steel plate, there is ferrite in the microstructure at 50% or more. The area proportion of ferrite is preferably 55% or more. However, if the area proportion of ferrite exceeds 80%, sufficient strength cannot be obtained. Therefore, the area proportion of ferrite is set to 80% or less, and preferably 75% or less. In the present embodiment, ferrite is so-called polygonal ferrite, not acicular ferrite or deformed ferrite having a large aspect ratio.

On the other hand, there is bainite in the microstructure at 20% or more because it has a function of improving the strength of the steel plate. The area proportion of bainite is preferably 25% or more. However, if the area proportion of bainite exceeds 50%, it causes deterioration of the toughness. Therefore, the area proportion of bainite is set to 50% or less, and preferably 45% or less.

The steel plate for wind power generation plants according to the present embodiment may contain structures other than ferrite and bainite at 1.0% or less. Assuming the chemical composition of the steel plate for wind power generation plants according to the present embodiment and the production method, martensite-austenite constituent (MA) may be formed as a structure other than ferrite and bainite.

Average crystal grain size of ferrite: 25.0 to 50.0 μm

In order to improve the strength and low-temperature toughness of the steel plate, it is necessary to reduce the average crystal grain size of ferrite. If the average crystal grain size of ferrite at a depth position of t/4 (t: plate thickness) from the surface exceeds 50.0 μm, deterioration of the low-temperature toughness becomes significant. Therefore, the average crystal grain size of ferrite is set to 50.0 μm or less. The average crystal grain size of ferrite is preferably 45.0 μm or less. On the other hand, if the average crystal grain size of ferrite is smaller, the strength and toughness are higher, but there is a limit to reducing the crystal grain size in industrial production. Therefore, the substantial lower limit of the average crystal grain size of ferrite is 25.0 μm.

The microstructure of the steel plate for wind power generation plants according to the present embodiment is observed by the following method.

The plate thickness cross section (L cross section) parallel to the rolling direction of the steel plate is mirror-polished and then subjected to LePera corrosion at a depth position of t/4 from the surface, 5 fields of view are observed under an optical microscope at a magnification of 500, a binarization process is performed by image analysis, and a total area proportion of ferrite and bainite, and the area proportion of the remainder MA are calculated. Specifically, since MA is displayed in white, and ferrite and bainite are displayed in gray, for example, when 0 indicates black, and 255 indicates white, binarization is performed with a threshold value of 170, and respective area proportions are obtained by image processing.

In addition, respective area proportions of ferrite and bainite are measured using an electron backscatter diffraction (EBSD) method after the plate thickness cross section (L cross section) parallel to the rolling direction of the steel plate at a depth position of t/4 from the surface is mirror-polished and then finish-polished with colloidal silica. The obtained data is analyzed by setting a region surrounded by high-angle grain boundaries with a crystal orientation difference of 15 degrees or more by OIM (commercially available from TSL Solutions) as crystal grains and using the GAM value indicating the average value of the crystal orientation differences in the crystal grains, and thus ferrite and bainite are separated. Specifically, the area proportion is calculated using crystal grains having a GAM value of 0.5 or less as ferrite. In addition, the other areas are area proportions of bainite and the remainder. Since MA is observed in bainite, for samples in which MA is observed, the MA area proportion is subtracted from the bainite area proportion measured and calculated by the above EBSD method, and this is used as the bainite area proportion.

A circle equivalent diameter in a region which is surrounded by high-angle grain boundaries with 15 degrees or more and in which the GAM value is 0.5 or less is calculated according to OIM (commercially available from TSL Solutions) when the above area proportion of ferrite is calculated, and the average crystal grain size of ferrite is calculated as an average value of the circle equivalent diameters measured at observation fields of view.

Porosity volume at a depth position (t: plate thickness) of t/2 from the surface: $0.20 \times 10^{-3}$ cm$^3$/g or less

The porosity present in the steel plate causes deterioration of the toughness and tensile strength of the steel plate. In order to obtain excellent low-temperature toughness and high strength, in the steel plate for wind power generation plants according to the present embodiment, the porosity volume at a depth position of t/2 from the surface is set to $0.20 \times 10^{-3}$ cm$^3$/g or less. The porosity volume at a depth position of t/2 from the surface is defined because the porosity tends to remain at this position.

A smaller porosity volume is more preferable, but if the porosity volume is less than $5.0 \times 10^{-6}$ cm$^3$/g, the production load is significantly high so that the porosity volume may be $5.0 \times 10^{-6}$ cm$^3$/g or more.

The porosity volume at a depth position of t/2 from the surface is measured by the following method.

The specific gravity is calculated according to a specific gravity measurement method specified in JIS Z8807: 2012. Specifically, in the cross section including the thickness direction of the steel plate, samples are collected at a depth position of t/2 (t: plate thickness) from the surface and at a depth position of t/4 the surface, and the specific gravities ($\rho_{t/2}$, $\rho_{t/4}$) at respective positions are obtained. Then, the depth position of t/4 is assumed to be a stationary part with few porosity defects, and a reciprocal difference of the specific gravities at a depth position of t/2 and a depth position of t/4 from the surface is obtained based on the following formula, and used as the porosity volume at a depth position of t/2 from the surface.

Porosity volume at a depth position of t/2 from the surface (cm$^3$/g) = $1/\rho_{t/2} - 1/\rho_{t/4}$

(Plate thickness: 60 mm or more, plate width: 3,000 mm or more)

The steel plate for wind power generation plants according to the present embodiment is an extremely thick and wide steel plate having a plate thickness of 60 mm or more and a plate width of 3,000 mm or more in consideration of increasing the size of wind power generation plants and improving workability. Even with such a plate thickness and plate width, if the above chemical composition and microstructure and the like are provided, it is possible to achieve both high strength and excellent toughness required for the steel plate for wind power generation plants.

The plate thickness of the steel plate for wind power generation plants according to the present embodiment is not limited, but 110 mm is the substantial upper limit in consideration of compressing the porosity. In addition, the plate width is substantially 4,500 mm or less, considering that a steel plate having a plate thickness of 60 mm is produced from a slab that can be produced.

The steel plate for wind power generation plants according to the present embodiment has high strength and excellent toughness, and specifically, as the target, the tensile strength (TS) is 440 MPa or more, and the Charpy absorption energy (vE-50) at -50°C is 50 J or more. The tensile strength is preferably 599 MPa or less in consideration of processability.

2. Method for producing steel plate for wind power generation plants

A steel plate for wind power generation plants according to the present embodiment can be produced by a production method including the following processes (I) to (V).

(I) a continuous casting process in which a slab having a thickness of ts and a porosity volume of $1.0 \times 10^{-3}$ cm$^3$/g or less at a depth position of ts/2 from the surface is obtained by continuous casting,

(II) a rough rolling process in which the slab is heated to 1,020 to 1,070°C, and the heated slab is roughly rolled to obtain a rough-rolled slab,

(III) a finish rolling process in which the rough-rolled slab is subjected to a plurality of passes of finish rolling including one or more passes in which the shape ratio is 0.50 or more under the condition that the surface temperature is 800°C or higher in an austenite un-recrystallized region to obtain a steel plate,

(IV) a water cooling process in which the steel plate is immediately cooled with water, and the surface temperature thereof is changed from a temperature of 800°C or higher to a temperature of 300 to 400°C, and

(V) a cutting process in which the water-cooled steel plate is cut out so that the plate width is 3,000 mm or more.

[Continuous casting process]

The thickness of the slab obtained by the continuous casting process is 200 to 400 mm due to facility restrictions. Therefore, when an extremely thick steel plate having a plate thickness of 60 mm or more is produced, there is no choice but to reduce the total reduction amount in the rolling process (rough rolling and finish rolling). Therefore, if the initial slab contains a large amount of porosity, the porosity remains in the rolled steel plate, which results in internal defects. Therefore, in order to reduce the porosity volume of the steel plate, the porosity volume at a depth position of ts/2 (ts: slab thickness) from the surface of the slab needs to be $1.0 \times 10^{-3}$ cm$^3$/g or less.

In order to set the porosity volume to $1.0 \times 10^3$ cm$^3$/g or less, for example, the casting speed during continuous casting is reduced, that is, the casting speed in the longitudinal direction during continuous casting is set to 0.5 to 1.3 m/min, and reduction can be performed at a reduction rate of 0.6 to 1.0 mm/min in the thickness direction. The porosity volume of the slab can be converted from the specific gravity of the slab. The detailed measurement method will be described below.

In the continuous casting process, additionally, when a slab is produced, a slab containing an unsolidified part is subjected to reducing rolling, and it is preferable to perform a reduction of 3 mm or more and 30 mm or less with a solid phase ratio of the center part in a range of 0.75 or more and less than 1.0.

If the porosity volume of the slab can be reduced from the stage in which continuous casting is performed, the porosity volume of the steel plate of the final product can be further reduced. In order to reduce the porosity volume of the slab, when continuous casting is performed, it is preferable to perform reduction using a pair of reducing rolls attached to a continuous casting machine when a solid phase ratio (center solid phase ratio) of the center part of the slab is in a range of 0.75 or more and less than 1.0, that is, in a so-called end stage of solidification.

In addition to lowering the casting speed, when reduction in the end stage of solidification is performed, the porosity volume at a depth position of ts/2 (ts: slab thickness) from the surface of the slab can be smaller, for example, reduced to $0.15 \times 10^{-3}$ cm$^3$/g or less.

If the center solid phase ratio when reduction is performed is less than 0.75, since a relatively large amount of molten steel in the end stage of solidification still remains at the thickness center part of the slab, the molten steel remaining in the center part of the slab is discharged when a large reduction is applied, and flows toward the base molten steel. Therefore, the progress of solidification is not always uniform and the thickness of the solidification shell becomes non-uniform due to uneven cooling, and thus the center solid phase ratio during reduction varies depending on the position of the slab.

When the center solid phase ratio is 0.75 or more, since the amount of the molten steel in the end stage of solidification present inside the slab is small, the molten steel hardly flows even if a large reduction is applied, and as a result, the center segregation state does not deteriorate. For the above reason, reduction is performed when the center solid phase ratio in the end stage of solidification is 0.75 or more. Preferably, reduction is performed when the center solid phase ratio is 0.80 or more.

In addition, during a period from when the solidification shell on the upper and lower surfaces of the slab comes in contact with the thickness center part until solidification is completed (that is, the center solid phase ratio becomes 1.0), since the liquid phase cannot flow if it is confined, the porosity is likely to be formed due to the density difference during the liquid phase is changed to the solid phase. Therefore, it is preferable to apply the reduction during this period because the reduction can proceed inside the slab having a small deformation resistance, and formation of the porosity can be minimized.

However, after the center solid phase ratio reaches 1.0 (that is, after solidification is completed), since the temperature of the thickness center part of the slab decreases, the deformation resistance increases sharply. Therefore, even if a large reduction is applied after the center solid phase ratio reaches 1.0, the thickness center part of the slab in which the porosity is distributed is not effectively reduced, and therefore the large center porosity may not be reduced or compressed.

For the above reason, it is preferable to perform reduction in a region of the end stage of solidification in which the center solid phase ratio is 0.75 or more and less than 1.0. In addition, since there is a variation in the deformation resistance when solidification is completed if the center solid phase ratio is about 1.0, it is more preferable to perform reduction in a region of the end stage of solidification in which the center solid phase ratio is 0.75 or more and 0.95 or less.

The center solid phase ratio (fs) is a solid phase ratio in the center part of the slab in the thickness direction during casting, and can be obtained according to fs=(TL-T)/(TL-TS) from the liquidus temperature (TL) and the solidus temperature (TS) of the molten steel and the temperature (T) at the thickness center of the slab. When the temperature (T) at the thickness center of the slab is equal to or higher than the liquidus temperature (TL) of the molten steel, fs=0, and when the temperature T at the thickness center is equal to or lower than the solidus temperature (TS) of the molten steel, fs=1.0. In addition, the temperature (T) at the thickness center of the slab can be obtained by transient heat transfer calculation in the slab in consideration of the casting speed, surface cooling of the slab, physical properties such as a casting steel grade, and the like.

Thus, in the end stage of solidification, it is preferable to perform reduction with a reduction amount of 3 to 30 mm in the central part of the slab in the width direction. When reduction is performed with a reduction amount of 3 to 30 mm, it is possible to further obtain the effect of suppressing a significant increase in the reduction force and reducing the porosity volume. Therefore, the reduction amount is 3 to 30 mm.

[Rough rolling process]

The slab is subjected to a plurality of passes of rough rolling by a rough rolling mill. In this case, a plurality of reduction passes for sizing rolling are performed to obtain a rough-rolled slab having a wider width (3,000 mm or more) than those in the related art.

The slab before rough rolling is heated to 1,020 to 1,070°C. The slab is heated to an austenite transformation point (Ac3 point) or higher and kept at a high temperature, and thus the austenite grain size becomes coarse. When the heating temperature is higher, coarsening is promoted. The target steel plate in the present embodiment has a thick plate thickness and a wide plate width and a large reduction amount (cumulative reduction amount and one-pass reduction amount) cannot be secured although grain refining is generally performed according to reduction in the rolling process. Therefore, if the heating temperature exceeds 1,070°C, the grain size becomes coarse to the extent that grain refining is not performed even in the rolling process, and the ferrite grain size in the final structure also increases. In this case, the toughness deteriorates. Therefore, the slab heating temperature is set to 1,070°C or lower. The heating temperature is preferably 1,060°C or lower, and more preferably 1,050°C or lower.

On the other hand, if the heating temperature before rough rolling is lower than 1,020°C, the thermal deformation resistance increases, and rolling with a sufficient reduction amount cannot be obtained. In this case, the porosity of the slab cannot be sufficiently compressed. Therefore, the heating temperature of the slab before rough rolling is 1,020°C or higher. In order to secure the cumulative reduction amount in the finish rolling and compress the porosity more firmly, it is preferable to perform rough rolling with the width after sizing rolling set to be within a product width (plate width of steel plate) +200 mm. In addition, this will contribute to improving the yield.

[Finish rolling process]

In the finish rolling process, the rough-rolled slab is subjected to finish rolling under conditions that the surface temperature is 800°C or higher in an austenite un-recrystallized region to obtain a steel plate. In addition, the finish rolling includes a plurality of passes of rolling including one or more passes under the condition that the shape ratio is 0.50 or more.

During finish rolling, if the surface temperature of the slab is a temperature exceeding the austenite un-recrystallized region, the crystal grain of the obtained steel plate becomes coarse, and the toughness deteriorates. However, in the case of wide materials, even if the temperature is in the austenite un-recrystallized region, in a temperature range of lower than 800°C, reduction becomes difficult, and the porosity cannot be compressed. Therefore, it is necessary to perform finish rolling in the temperature range in which the surface temperature of the slab is in the austenite un-recrystallized region and 800°C or higher.

The austenite un-recrystallized region is a temperature range which is equal to or higher than the austenite transformation point (Ar3 point) and is equal to or lower than a temperature at which austenite grains are newly formed and grown. Here, the Ar3 point is generally 800°C or lower, and can be estimated by the following formula expressed using the chemical composition of the steel plate. On the other hand, a temperature at which austenite grains are newly formed and grown, that is, the upper limit temperature of the austenite un-recrystallized region, is generally a temperature exceeding the Ar3 point+110°C. Therefore, if finish rolling is performed when the surface temperature of the rough-rolled slab is 800°C or higher and the Ar3 point+110°C or lower, finish rolling can be performed under the condition of the surface temperature specified in the present embodiment.

$$\text{Ar3 point (°C)}=910-273{\times}C+25{\times}Si-74{\times}Mn-56{\times}Ni-16{\times}Cr-9{\times}Mo-5{\times}Cu-1620{\times}Nb$$

Each element symbol in the formula indicates the content (mass%) of each element contained in the steel plate, and if it is not contained, it is set to zero.

However, even if rolling is performed at such an appropriate temperature, if the reduction amount is small, in other words, if the parameter called the shape ratio, which depends on the reduction amount and the roll diameter, is small, the porosity volume remaining after rolling cannot be effectively reduced. Therefore, a plurality of passes of finish rolling including one or more passes under the condition that the shape ratio is 0.50 or more are performed. The shape ratio is preferably 0.55 or more and more preferably 0.60 or more. Due to facility restrictions, 0.80 is the substantial upper limit of the shape ratio. A reverse mill can be used as a finish rolling mill. In addition, the shape ratio is provided according to the following formula.

$$\text{Shape ratio} = (R{\times}\Delta H)^{1/2}/((H_1+H_2)/2)$$

However, in the formula, R indicates a roll radius (mm), $H_1$ indicates a thickness (mm) before rolling, $H_2$ indicates a thickness (mm) after rolling, and $\Delta H$ is a calculated value of $(H_1-H_2)$.

When finish rolling is performed in this manner, it is possible to obtain a steel plate having a small porosity volume even if the thickness is 60 mm or more.

[Water cooling process]

In the water cooling process, the steel plate is cooled with water such that a surface temperature drops from a temperature of 800°C or higher to a temperature of 300 to 400°C.

As described above, finish rolling is performed at a temperature of 800°C or higher. Then, cooling is performed such that a surface temperature drops from 800°C or higher (water cooling (DQ) starts before the surface temperature drops to a temperature range of lower than 800°C) to a temperature of 300 to 400°C. If water cooling starts after the surface temperature of the steel plate drops to lower than 800°C, there is a concern of the area proportion of ferrite becoming excessive, and a sufficient strength not being obtained. In addition, there is a concern of the crystal grains becoming coarse and this may be a factor in causing toughness to deteriorate.

Water cooling started from a temperature of 800°C or higher is stopped (completed) so that the surface temperature of the steel plate becomes a constant temperature. If the cooling stop temperature exceeds 400°C, there is a concern of the area proportion of ferrite becoming excessive and a sufficient strength not being obtained. In addition, there is a concern of ferrite becoming coarse and this may be a factor in causing toughness to deteriorate. On the other hand, if the cooling stop temperature is lower than 300°C, a hardened structure such as martensite is formed and this may be a factor in causing toughness to deteriorate also in this case. Therefore, the cooling stop temperature is set to 300 to 400°C. When reheating by the residual heat occurs, the cooling stop temperature is a temperature after reheating by the residual heat.

The cooling rate may be a general water cooling rate, but it may be, for example, an average cooling rate of 3.0 to 6.0 °C/sec at a depth position of t/4 (t: plate thickness) from the surface.

The average cooling rate at a depth position of t/4 (t: plate thickness) from the surface can be obtained by a simulation.

[Cutting process]

After the water cooling process, the steel plate is cut out so that the plate width is 3,000 mm or more. The cutting method is not limited, but it is difficult to cut out a thick steel plate having a plate thickness of 60 mm or more with a shear. Therefore, gas cutting is an exemplary example of the cutting method.

According to the above production method, even if a thick steel plate having a plate thickness of 60 mm or more or a plate thickness of 80 mm or more is produced, the porosity of the steel plate after rolling can be sufficiently reduced (specifically, $0.20{\times}10^{-3}$ $cm^3/g$ or less), and a wide and thick steel plate having excellent low-temperature toughness and high strength can be produced.

[Examples]

Slabs having a thickness of 300 mm and having various porosity volumes were produced by variously changing the casting speed during continuous casting and the reduction rate and the reduction amount in the end stage of solidification (center solid phase ratio is 0.75 or more and less than 1.0). Table 1A, Table 1B, Table 2A and Table 2B show the chemical compositions and the porosity volumes of the slabs. For slabs having a porosity volume of $1.0 \times 10^{-3}$ $cm^3/g$ or less at a depth position of ts/2 (ts: slab thickness) from the surface, reduction was performed under the conditions that the casting speed in the longitudinal direction during continuous casting was 0.5 to 1.3 m/min and the reduction rate in the thickness direction was 0.6 to 1.0 mm/min to form slab shapes.

[Table 1A]

| No. | Chemical composition of slab (mass%, the remainder: Fe and impurities) | | | | | | | | | | | |
|---|---|---|---|---|---|---|---|---|---|---|---|---|
| | C | Si | Mn | P | S | Cu | Ni | Cr | Mo | V | Nb | Ti |
| 1 | 0.06 | 0.30 | 1.56 | 0.007 | 0.003 | 0.36 | 0.40 | | | | 0.022 | 0.036 |
| 2 | 0.06 | 0.19 | 1.54 | 0.016 | 0.003 | 0.41 | 0.25 | | | | 0.029 | 0.020 |
| 3 | 0.08 | 0.22 | 1.40 | 0.010 | 0.003 | 0.15 | 0.24 | | | | 0.029 | 0.033 |
| 4 | 0.07 | 0.32 | 1.29 | 0.019 | 0.003 | 0.16 | 0.44 | | | | 0.037 | 0.013 |
| 5 | 0.09 | 0.40 | 1.53 | 0.008 | 0.004 | 0.36 | 0.16 | | 0.09 | 0.10 | 0.030 | 0.015 |
| 6 | 0.08 | 0.32 | 1.36 | 0.012 | 0.003 | 0.39 | 0.45 | | 0.04 | 0.06 | 0.035 | 0.026 |
| 7 | 0.09 | 0.31 | 1.33 | 0.015 | 0.004 | 0.16 | 0.33 | | | | 0.018 | 0.037 |
| 8 | 0.06 | 0.23 | 1.47 | 0.008 | 0.003 | 0.34 | 0.39 | | | 0.05 | 0.022 | 0.034 |
| 9 | 0.07 | 0.19 | 1.44 | 0.018 | 0.004 | 0.39 | 0.31 | | | | 0.025 | 0.004 |
| 10 | 0.07 | 0.38 | 1.27 | 0.018 | 0.004 | 0.36 | 0.32 | 0.18 | 0.08 | 0.03 | 0.019 | 0.016 |
| 11 | 0.06 | 0.32 | 1.48 | 0.009 | 0.004 | 0.24 | 0.28 | | | | 0.026 | 0.011 |
| 12 | 0.07 | 0.26 | 1.43 | 0.017 | 0.003 | 0.42 | 0.16 | | | 0.13 | 0.017 | 0.035 |
| 13 | 0.06 | 0.36 | 1.35 | 0.013 | 0.003 | 0.15 | 0.34 | | 0.03 | 0.12 | 0.024 | 0.010 |
| 14 | 0.07 | 0.28 | 1.31 | 0.014 | 0.004 | 0.33 | 0.28 | | | 0.09 | 0.033 | 0.017 |
| 15 | 0.06 | 0.24 | 1.29 | 0.018 | 0.004 | 0.15 | 0.35 | | | 0.05 | 0.030 | 0.033 |
| 16 | 0.09 | 0.21 | 1.54 | 0.011 | 0.004 | 0.28 | 0.39 | | | | 0.019 | 0.013 |
| 17 | 0.06 | 0.18 | 1.47 | 0.012 | 0.003 | 0.21 | 0.43 | | | | 0.022 | 0.018 |
| 18 | 0.06 | 0.40 | 1.49 | 0.007 | 0.003 | 0.38 | 0.33 | 0.34 | | | 0.027 | 0.028 |
| 19 | 0.08 | 0.31 | 1.38 | 0.008 | 0.003 | 0.37 | 0.44 | 0.31 | | | 0.036 | 0.019 |
| 20 | 0.07 | 0.23 | 1.37 | 0.010 | 0.002 | 0.46 | 0.15 | | 0.01 | | 0.016 | 0.021 |
| 21 | 0.06 | 0.41 | 1.45 | 0.013 | 0.003 | 0.17 | 0.40 | | | | 0.033 | 0.006 |
| 22 | 0.07 | 0.16 | 1.23 | 0.013 | 0.004 | 0.31 | 0.41 | | | 0.04 | 0.024 | 0.017 |
| 23 | 0.08 | 0.15 | 1.49 | 0.012 | 0.003 | 0.30 | 0.20 | | | | 0.017 | 0.035 |

[Table 1B]

| No. | Chemical composition of slab (mass%, the remainder: Fe and impurities) | | | | | | | Ar3 point (°C) | Reduction amount in end stage of solidification (mm) | Porosity volume $\times 10^{-3}$ ($cm^3/g$) |
|---|---|---|---|---|---|---|---|---|---|---|
| | Al | N | O | Ca | Mg | REM | B | | | |
| 1 | 0.036 | 0.005 | 0.0034 | | | | | 726 | 0 | 0.87 |

(continued)

| No. | Chemical composition of slab (mass%, the remainder: Fe and impurities) | | | | | | | Ar3 point (°C) | Reduction amount in end stage of solidification (mm) | Porosity volume × 10⁻³ (cm³/g) |
|---|---|---|---|---|---|---|---|---|---|---|
| | Al | N | O | Ca | Mg | REM | B | | | |
| 2 | 0.015 | 0.004 | 0.0065 | | | | | 721 | 0 | 0.58 |
| 3 | 0.041 | 0.005 | 0.0030 | | | | | 729 | 0 | 0.15 |
| 4 | 0.016 | 0.005 | 0.0028 | | | | | 718 | 0 | 0.24 |
| 5 | 0.026 | 0.004 | 0.0041 | | | | | 722 | 0 | 0.44 |
| 6 | 0.029 | 0.004 | 0.0048 | | | | 0.0008 | 711 | 0 | 0.96 |
| 7 | 0.027 | 0.004 | 0.0019 | | 0.0023 | 0.0019 | 0.0011 | 746 | 0 | 0.54 |
| 8 | 0.031 | 0.004 | 0.0062 | | | | | 731 | 0 | 0.47 |
| 9 | 0.049 | 0.005 | 0.0039 | | 0.0029 | | | 729 | 0 | 0.83 |
| 10 | 0.047 | 0.005 | 0.0065 | | | 0.0027 | 0.0018 | 752 | 0 | 0.97 |
| 11 | 0.030 | 0.004 | 0.0020 | | | | 0.0012 | 733 | 0 | 0.44 |
| 12 | 0.054 | 0.005 | 0.0044 | | | | 0.0004 | 753 | 0 | 0.44 |
| 13 | 0.050 | 0.005 | 0.0036 | | | | | 744 | 0 | 0.97 |
| 14 | 0.037 | 0.004 | 0.0020 | | | | | 730 | 0 | 0.78 |
| 15 | 0.030 | 0.005 | 0.0044 | | | | | 735 | 0 | 0.37 |
| 16 | 0.029 | 0.005 | 0.0042 | 0.0011 | | 0.0035 | | 723 | 0 | 0.34 |
| 17 | 0.055 | 0.005 | 0.0043 | | | | | 729 | 0 | 0.91 |
| 18 | 0.029 | 0.004 | 0.0063 | | | | | 724 | 0 | 0.60 |
| 19 | 0.043 | 0.004 | 0.0044 | 0.0010 | 0.0010 | | 0.0010 | 704 | 7 | 0.09 |
| 20 | 0.025 | 0.004 | 0.0055 | | | 0.0016 | | 759 | 18 | 0.03 |
| 21 | 0.023 | 0.002 | 0.0034 | | | | 0.0003 | 720 | 11 | 0.07 |
| 22 | 0.020 | 0.004 | 0.0065 | | | | | 740 | 21 | 0.05 |
| 23 | 0.018 | 0.003 | 0.0030 | | | | | 741 | 16 | 0.08 |

[Table 2A]

| No. | Chemical composition of slab (mass%, the remainder: Fe and impurities) | | | | | | | | | | | |
|---|---|---|---|---|---|---|---|---|---|---|---|---|
| | C | Si | Mn | P | S | Cu | Ni | Cr | Mo | V | Nb | Ti |
| x1 | 0.04 | 0.20 | 1.31 | 0.018 | 0.004 | 0.29 | 0.46 | | | | 0.024 | 0.018 |
| x2 | 0.12 | 0.20 | 1.45 | 0.014 | 0.003 | 0.30 | 0.27 | | | | 0.028 | 0.035 |
| x3 | 0.09 | 0.47 | 1.26 | 0.013 | 0.004 | 0.17 | 0.35 | | | | 0.036 | 0.021 |
| x4 | 0.07 | 0.22 | 1.08 | 0.016 | 0.004 | 0.27 | 0.18 | 0.18 | | | 0.032 | 0.027 |
| x5 | 0.07 | 0.37 | 1.71 | 0.007 | 0.003 | 0.39 | 0.28 | 0.23 | 0.08 | | 0.026 | 0.022 |
| x6 | 0.05 | 0.18 | 1.44 | 0.011 | 0.006 | 0.32 | 0.31 | | 0.07 | 0.05 | 0.013 | 0.011 |
| x7 | 0.06 | 0.41 | 1.49 | 0.017 | 0.004 | 0.05 | 0.29 | | 0.03 | | 0.022 | 0.034 |
| x8 | 0.05 | 0.42 | 1.29 | 0.013 | 0.004 | 0.58 | 0.19 | | 0.13 | 0.11 | 0.028 | 0.033 |
| x9 | 0.07 | 0.19 | 1.37 | 0.013 | 0.003 | 0.33 | 0.05 | | 0.03 | | 0.025 | 0.037 |

(continued)

| No. | Chemical composition of slab (mass%, the remainder: Fe and impurities) | | | | | | | | | | | |
|---|---|---|---|---|---|---|---|---|---|---|---|---|
| | C | Si | Mn | P | S | Cu | Ni | Cr | Mo | V | Nb | Ti |
| x10 | 0.06 | 0.23 | 1.28 | 0.012 | 0.003 | 0.22 | 0.37 | | | | <u>0.005</u> | 0.028 |
| x11 | 0.09 | 0.14 | 1.37 | 0.009 | 0.004 | 0.47 | 0.36 | | | | 0.024 | <u>0.001</u> |
| x12 | 0.06 | 0.30 | 1.56 | 0.007 | 0.003 | 0.36 | 0.40 | | | | 0.022 | 0.036 |
| x14 | 0.09 | 0.43 | 1.56 | 0.019 | 0.003 | 0.33 | 0.35 | 0.31 | 0.06 | 0.05 | 0.014 | 0.006 |
| x16 | 0.08 | 0.32 | 1.36 | 0.012 | 0.003 | 0.39 | 0.45 | | 0.04 | 0.06 | 0.035 | 0.026 |
| x20 | 0.07 | 0.38 | 1.27 | 0.018 | 0.004 | 0.36 | 0.32 | 0.18 | 0.08 | 0.03 | 0.019 | 0.016 |
| x21 | <u>0.13</u> | 0.28 | 1.44 | 0.008 | 0.002 | 0.23 | 0.14 | 0.24 | | | 0.026 | 0.030 |
| x22 | 0.07 | 0.31 | <u>1.86</u> | 0.014 | 0.002 | 0.44 | 0.39 | | 0.11 | | 0.016 | 0.008 |
| x23 | 0.07 | 0.33 | 1.50 | 0.007 | 0.004 | 0.29 | 0.20 | | | 0.03 | 0.029 | 0.006 |
| x24 | 0.09 | 0.15 | 1.33 | 0.014 | 0.004 | 0.14 | 0.15 | | | | 0.025 | 0.029 |
| x25 | 0.07 | 0.30 | 1.49 | 0.014 | 0.004 | 0.40 | 0.27 | | | | 0.031 | 0.012 |
| x26 | 0.08 | 0.28 | 1.43 | <u>0.034</u> | 0.002 | 0.39 | 0.13 | | | | 0.013 | 0.019 |
| x27 | 0.09 | 0.39 | 1.25 | 0.018 | 0.003 | 0.31 | <u>1.52</u> | | | | 0.020 | 0.025 |
| x28 | 0.09 | 0.37 | 1.43 | 0.019 | 0.004 | 0.21 | 0.37 | | | | <u>0.062</u> | 0.037 |
| x29 | 0.06 | 0.36 | 1.33 | 0.008 | 0.002 | 0.26 | 0.23 | | | | 0.019 | <u>0.063</u> |
| x30 | 0.07 | 0.34 | 1.34 | 0.015 | 0.002 | 0.19 | 0.33 | | | | 0.019 | 0.030 |
| x31 | 0.08 | 0.31 | 1.38 | 0.008 | 0.003 | 0.37 | 0.44 | | | | 0.036 | 0.019 |
| x32 | 0.07 | <u>0.04</u> | 1.37 | 0.010 | 0.002 | 0.46 | 0.15 | | | | 0.016 | 0.021 |
| x33 | 0.06 | 0.41 | 1.45 | 0.013 | 0.003 | 0.17 | 0.40 | | | | 0.033 | 0.006 |
| x34 | 0.07 | 0.16 | 1.23 | 0.013 | 0.004 | 0.31 | 0.41 | | 0.04 | | 0.024 | 0.017 |
| x35 | 0.06 | 0.36 | 1.33 | 0.008 | 0.002 | 0.26 | 0.23 | | | | 0.019 | 0.011 |
| x36 | 0.07 | 0.34 | 1.34 | 0.015 | 0.002 | 0.19 | 0.33 | | 0.01 | 0.11 | 0.019 | 0.030 |
| x37 | 0.08 | 0.28 | 1.43 | 0.010 | 0.002 | 0.39 | 0.13 | | | | 0.013 | 0.019 |
| x38 | 0.09 | 0.39 | 1.25 | 0.018 | 0.003 | 0.31 | 0.39 | | | 0.05 | 0.020 | 0.025 |
| x39 | 0.09 | 0.37 | 1.43 | 0.019 | 0.004 | 0.21 | 0.37 | | | | 0.015 | 0.037 |
| x40 | 0.07 | 0.21 | 1.54 | 0.015 | 0.004 | 0.29 | 0.24 | | | | 0.030 | 0.013 |
| Underline indicates that the value is outside of the scope specified in the present invention. | | | | | | | | | | | | |

[Table 2B]

| No. | Chemical composition of slab (mass%, the remainder: Fe and impurities) | | | | | | | Ar3 point (°C) | Reduction amount in end stage of solidification (mm) | Porosity volume $\times 10^{-3}$ (cm$^3$/g) |
|---|---|---|---|---|---|---|---|---|---|---|
| | Al | N | O | Ca | Mg | REM | B | | | |
| x1 | 0.054 | 0.003 | 0.0020 | | | | 0.0006 | 741 | 0 | 0.61 |
| x2 | 0.021 | 0.005 | 0.0044 | | | | 0.0013 | 713 | 0 | 0.43 |
| x3 | 0.033 | 0.005 | 0.0036 | | | | 0.0016 | 725 | 0 | 0.56 |
| x4 | 0.040 | 0.003 | 0.0020 | | | | 0.0006 | 743 | 0 | 0.12 |

(continued)

| No. | Chemical composition of slab (mass%, the remainder: Fe and impurities) | | | | | | | Ar3 point (°C) | Reduction amount in end stage of solidification (mm) | Porosity volume $\times 10^{-3}$ (cm³/g) |
|-----|------|------|--------|--------|--------|--------|--------|-----|-----|------|
|     | Al   | N    | O      | Ca     | Mg     | REM    | B      |     |     |      |
| x5  | 0.018 | 0.003 | 0.0044 |        |        |        |        | 717 | 0 | 0.47 |
| x6  | 0.049 | 0.004 | 0.0042 | 0.0011 |        | 0.0035 | 0.0003 | 754 | 0 | 0.68 |
| x7  | 0.030 | 0.004 | 0.0043 |        |        |        |        | 741 | 0 | 0.90 |
| x8  | 0.053 | 0.003 | 0.0063 |        |        |        |        | 752 | 0 | 0.44 |
| x9  | 0.054 | 0.005 | 0.0044 | 0.0010 | 0.0010 |        |        | 749 | 0 | 0.97 |
| x10 | 0.014 | 0.005 | 0.0055 |        |        | 0.0016 | 0.0014 | 775 | 0 | 0.40 |
| x11 | 0.025 | 0.003 | 0.0031 |        |        |        | 0.0003 | 726 | 0 | 0.19 |
| x12 | 0.036 | 0.005 | 0.0040 |        |        |        |        | 726 | 0 | 0.54 |
| x14 | 0.016 | 0.005 | 0.0042 |        |        |        |        | 731 | 0 | 0.11 |
| x16 | 0.029 | 0.004 | 0.0030 | 0.0045 |        | 0.0024 | 0.0008 | 711 | 0 | 0.96 |
| x20 | 0.047 | 0.005 | 0.0051 |        |        |        | 0.0018 | 752 | 0 | 0.97 |
| x21 | 0.016 | 0.003 | 0.0054 |        |        |        |        | 720 | 27 | 0.09 |
| x22 | 0.024 | 0.005 | 0.0063 |        |        |        |        | 710 | 12 | 0.05 |
| x23 | 0.042 | 0.005 | 0.0029 |        |        |        |        | 729 | 28 | 0.04 |
| x24 | 0.033 | 0.003 | 0.0024 |        |        |        | 0.0008 | 741 | 27 | 0.08 |
| x25 | 0.047 | 0.002 | 0.0038 |        |        | I      |        | 721 | 17 | 0.09 |
| x26 | 0.050 | 0.005 | 0.0018 | 0.0028 |        | 0.0025 |        | 759 | 0 | 0.56 |
| x27 | 0.041 | 0.002 | 0.0046 |        | 0.0020 |        |        | 747 | 0 | 0.64 |
| x28 | 0.042 | 0.004 | 0.0033 |        | 0.0031 |        |        | 743 | 0 | 0.50 |
| x29 | 0.021 | 0.004 | 0.0050 | 0.0010 |        |        |        | 759 | 0 | 0.30 |
| x30 | <u>0.084</u> | 0.003 | 0.0051 | 0.0020 |        | 0.0021 |        | 750 | 0 | 0.66 |
| x31 | 0.043 | <u>0.009</u> | 0.0026 |        |        |        | 0.0010 | 709 | 0 | 0.48 |
| x32 | 0.025 | 0.004 | 0.0045 |        |        |        | 0.0011 | 759 | 0 | 0.16 |
| x33 | <u>0.006</u> | 0.003 | 0.0045 |        |        |        | 0.0003 | 720 | 0 | 0.74 |
| x34 | 0.020 | 0.004 | 0.0044 |        |        |        |        | 740 | 0 | 0.43 |
| x35 | 0.021 | 0.004 | 0.0021 |        |        |        |        | 721 | 0 | 0.74 |
| x36 | 0.030 | 0.003 | 0.0061 |        |        |        |        | 722 | 0 | <u>2.51</u> |
| x37 | 0.050 | 0.005 | 0.0031 |        |        |        | 0.0011 | 746 | 0 | 0.54 |
| x38 | 0.041 | 0.002 | 0.0032 |        | 0.0039 |        |        | 731 | 0 | 0.47 |
| x39 | 0.042 | 0.004 | 0.0024 |        |        |        |        | 729 | 0 | 0.83 |
| x40 | 0.029 | 0.005 | 0.0024 | 0.0015 | 0.0014 | 0.0032 |        | 719 | 0 | 0.72 |
| Underline indicates that the value is outside of the scope specified in the present invention. | | | | | | | | | | |

<Porosity volume>

The specific gravity was calculated according to the specific gravity measurement method specified in JIS Z8807: 2012. Specifically, in the cross section including the thickness direction of the slab, samples were collected at a depth position of ts/2 (ts: slab thickness) from the surface and a depth position of ts/4 from the surface, and the specific gravities ($\rho_{t/2}$, $\rho_{t/4}$) at respective positions were obtained.

Regarding sample collection, for samples at a depth position of ts/2 (ts: slab thickness) from the surface, test pieces with a thickness of 7 mm, a length direction of 50 mm, and a width direction of 100 mm were collected so that the center of the sample is corresponding to the center of the slab in the width direction, and further nine samples were collected so that samples were adjacent to each other on both sides in the width direction (1 center+2×9=19 in total). In addition, for samples at a depth position of ts/4 from the surface, samples were collected so that the end of the sample was corresponding to a position of 100 mm from the center of the slab in the width direction and samples are laterally symmetrical, and additionally, further two samples were collected so that the distance between the samples in the width direction was 400 mm (3 on each on the left and right, for a total of 6).

Here, the depth position of ts/4 was defined as a stationary part with few porosity defects, and the average of the specific gravities of six samples collected from the depth position of ts/4 was defined as $\rho_{t/4}$.

On the other hand, $\rho_{t/2}$ was a specific gravity at each width direction position for each of 19 samples collected from the depth position of ts/2.

For the porosity volume, using $\rho_{t/2}$ at each width direction position at a depth position of ts/2 and an average specific gravity $\rho_{t/4}$ at a depth position of ts/4, a reciprocal difference of the specific gravities at a depth position of ts/2 and a depth position of ts/4 from the surface was obtained based on the following formula, and used as the porosity volume at a depth position of ts/2 from the surface at each width direction position. Here, in the present invention, the largest value among the porosity volumes at a depth position of ts/2 from the surface obtained at each width direction position was used as the porosity volume at a depth position of ts/2 from the surface in the slab.

Porosity volume at a depth position of ts/2 from the surface (cm$^3$/g)=$1/\rho_{ts/2}-1/\rho_{ts/4}$

The obtained slab was heated, rolled (rough rolling and finish rolling), cooled, and cut out to produce a steel plate. Table 3 and Table 4 show production conditions for steel plates. During rolling, the slab was heated, and then subjected to sizing rolling in a rough rolling mill to form a wide slab, and the slab was subjected to a plurality of reductions in a finish rolling mill (reverse rolling mill) when the surface temperature was within a constant temperature range. The conditions are shown in Table 3 and Table 4. In the tables, the maximum shape ratio is the shape ratio of reduction in which the shape ratio was the largest among the plurality of reductions.

[Table 3]

| No. | Rough rolling | Finish rolling | | | | Cooling | | | Plate thickness (mm) | Plate width (mm) |
|-----|---------------|----------------|---|---|---|---------|---|---|----------------------|------------------|
| | Heating temperature (°C) | Maximum temperature (°C) | Minimum temperature (°C) | Maximum shape ratio | | Start temperature (°C) | Stop temperature (°C) | Cooling rate at position of t/4 (°C/sec) | | |
| 1 | 1057 | 826 | 821 | 0.60 | | 810 | 390 | 3.7 | 90 | 3340 |
| 2 | 1052 | 815 | 805 | 0.60 | | 803 | 310 | 5.1 | 88 | 3920 |
| 3 | 1030 | 828 | 819 | 0.67 | | 802 | 381 | 3.4 | 98 | 3530 |
| 4 | 1026 | 812 | 808 | 0.59 | | 803 | 370 | 4.7 | 84 | 3410 |
| 5 | 1060 | 815 | 806 | 0.77 | | 803 | 365 | 5.6 | 85 | 3510 |
| 6 | 1064 | 814 | 809 | 0.71 | | 804 | 331 | 5.2 | 97 | 3750 |
| 7 | 1037 | 846 | 840 | 0.66 | | 827 | 376 | 3.8 | 95 | 3560 |
| 8 | 1058 | 835 | 818 | 0.70 | | 810 | 393 | 4.5 | 93 | 3410 |
| 9 | 1032 | 828 | 813 | 0.76 | | 801 | 358 | 3.7 | 86 | 3300 |
| 10 | 1020 | 843 | 833 | 0.79 | | 822 | 324 | 3.4 | 100 | 3300 |
| 11 | 1024 | 824 | 808 | 0.66 | | 805 | 395 | 3.4 | 93 | 3660 |
| 12 | 1044 | 851 | 834 | 0.63 | | 827 | 347 | 3.4 | 94 | 3360 |
| 13 | 1048 | 836 | 817 | 0.78 | | 811 | 394 | 3.7 | 98 | 3380 |
| 14 | 1048 | 830 | 822 | 0.72 | | 806 | 362 | 3.7 | 83 | 3140 |
| 15 | 1042 | 825 | 820 | 0.67 | | 812 | 307 | 5.0 | 90 | 3370 |
| 16 | 1053 | 824 | 815 | 0.68 | | 808 | 364 | 4.4 | 95 | 3880 |
| 17 | 1048 | 821 | 810 | 0.63 | | 804 | 314 | 3.4 | 89 | 3020 |
| 18 | 1055 | 826 | 817 | 0.75 | | 807 | 301 | 4.4 | 93 | 3350 |
| 19 | 1027 | 813 | 800 | 0.52 | | 805 | 368 | 5.1 | 79 | 3210 |
| 20 | 1046 | 847 | 823 | 0.61 | | 816 | 318 | 4.2 | 94 | 3470 |
| 21 | 1030 | 823 | 806 | 0.63 | | 801 | 350 | 5.7 | 90 | 3770 |
| 22 | 1039 | 841 | 826 | 0.58 | | 819 | 396 | 4.3 | 97 | 3940 |
| 23 | 1052 | 844 | 817 | 0.59 | | 809 | 352 | 4.9 | 76 | 3560 |

EP 4 119 688 A1

[Table 4]

| No. | Rough rolling | Finish rolling | | | | Cooling | | | Plate thickness (mm) | Plate width (mm) |
|---|---|---|---|---|---|---|---|---|---|---|
| | Heating temperature (°C) | Maximum temperature (°C) | Minimum temperature (°C) | Maximum shape ratio | Start temperature (°C) | Start temperature (°C) | Stop temperature (°C) | Cooling rate at position of t/4 (°C/sec) | | |
| x1 | 1040 | 839 | 829 | 0.61 | 825 | 351 | 4.3 | 81 | 3710 |
| x2 | 1054 | 811 | 803 | 0.70 | 801 | 382 | 4.5 | 85 | 3130 |
| x3 | 1033 | 827 | 818 | 0.64 | 812 | 390 | 4.7 | 91 | 3100 |
| x4 | 1042 | 851 | 841 | 0.70 | 820 | 399 | 5.4 | 91 | 3570 |
| x5 | 1048 | 812 | 804 | 0.70 | 802 | 335 | 4.5 | 85 | 3010 |
| x6 | 1023 | 854 | 849 | 0.79 | 830 | 366 | 5.3 | 85 | 3360 |
| x7 | 1061 | 836 | 830 | 0.70 | 821 | 340 | 4.9 | 82 | 3370 |
| x8 | 1067 | 850 | 839 | 0.75 | 834 | 322 | 4.4 | 98 | 3010 |
| x9 | 1039 | 852 | 838 | 0.64 | 814 | 355 | 5.4 | 98 | 3600 |
| x10 | 1058 | 871 | 860 | 0.63 | 833 | 318 | 4.2 | 81 | 3760 |
| x11 | 1067 | 826 | 814 | 0.69 | 810 | 315 | 4.9 | 99 | 3020 |
| x12 | 1121 | 823 | 816 | 0.62 | 814 | 331 | 4.5 | 90 | 3420 |
| x14 | 1067 | 827 | 804 | 0.62 | 802 | 286 | 5.6 | 97 | 3110 |
| x16 | 1053 | 855 | 815 | 0.72 | 805 | 352 | 4.1 | 89 | 3330 |
| x20 | 1062 | 850 | 809 | 0.52 | 804 | 268 | 3.4 | 85 | 3110 |
| x21 | 1049 | 805 | 805 | 0.53 | 837 | 378 | 4.9 | 72 | 3500 |
| x22 | 1023 | 815 | 802 | 0.59 | 814 | 317 | 5.0 | 80 | 3510 |
| x23 | 1123 | 825 | 807 | 0.55 | 813 | 314 | 4.1 | 91 | 3840 |
| x24 | 1030 | 912 | 808 | 0.61 | 830 | 342 | 5.5 | 74 | 3320 |
| x25 | 1049 | 826 | 807 | 0.58 | 802 | 216 | 5.4 | 77 | 3940 |
| x26 | 1026 | 848 | 840 | 0.54 | 820 | 302 | 4.3 | 75 | 3510 |
| x27 | 1031 | 822 | 812 | 0.58 | 805 | 337 | 4.8 | 96 | 3590 |
| x28 | 1034 | 835 | 820 | 0.56 | 812 | 344 | 4.2 | 82 | 3340 |

(continued)

| No. | Rough rolling | Finish rolling | | | Cooling | | | Plate thickness (mm) | Plate width (mm) |
|---|---|---|---|---|---|---|---|---|---|
| | Heating temperature (°C) | Maximum temperature (°C) | Minimum temperature (°C) | Maximum shape ratio | Start temperature (°C) | Stop temperature (°C) | Cooling rate at position of t/4 (°C/sec) | | |
| x29 | 1050 | 845 | 829 | 0.65 | 821 | 307 | 4.9 | 93 | 3250 |
| x30 | 1032 | 847 | 842 | 0.58 | 825 | 377 | 5.7 | 81 | 3200 |
| x31 | 1020 | 817 | 809 | 0.55 | 801 | 382 | 4.4 | 73 | 3010 |
| x32 | 1059 | 840 | 817 | 0.61 | 809 | 380 | 5.1 | 76 | 3210 |
| x33 | 1070 | 827 | 805 | 0.56 | 802 | 326 | 4.3 | 91 | 3020 |
| x34 | 1039 | 842 | 820 | 0.48 | 803 | 366 | 1.2 | 99 | 3650 |
| x35 | 1027 | 825 | 749 | 0.41 | 731 | 282 | 5.2 | 88 | 3620 |
| x36 | 1042 | 826 | 812 | 0.54 | 803 | 321 | 5.1 | 82 | 3260 |
| x37 | 1049 | 849 | 782 | 0.48 | 775 | 342 | 3.7 | 91 | 3420 |
| x38 | 1032 | 835 | 823 | 0.32 | 815 | 369 | 3.9 | 95 | 3120 |
| x39 | 1052 | 826 | 811 | 0.61 | 712 | 378 | 4.2 | 83 | 3560 |
| x40 | 1065 | 823 | 813 | 0.62 | 806 | 462 | 4.3 | 83 | 3310 |
| Underline indicates that the value is outside of the scope specified in the present invention. | | | | | | | | | |

EP 4 119 688 A1

The microstructure, porosity volume, mechanical strength and impact absorption energy of the obtained steel plates were evaluated. The results are shown in Table 5 and Table 6.

For measurement of the porosity volume, the specific gravity was calculated according to the specific gravity measurement method specified in JIS Z8807: 2012. Specifically, in the cross section including the plate thickness direction of the steel plate, samples were collected at a depth position of t/2 (t: plate thickness) from the surface and a depth position of t/4 from the surface, and the specific gravities ($\rho_{t/2}$, $\rho_{t/4}$) at respective positions were obtained.

Regarding sample collection, for samples at a depth position of t/2 (t: plate thickness) from the surface, test pieces with a thickness of 7 mm, a length direction of 50 mm, and a width direction of 100 mm were collected so that the center of the sample is corresponding to the center of the steel plate in the width direction, and a plurality of samples were further collected so that samples were adjacent to each other on both sides in the width direction. In addition, for samples at a depth position of t/4 from the surface, sample was collected at a position at which the end of the sample was corresponding to at a position of 100 mm from the center of the steel plate in the width direction and at a position of 1/4 of the width from the end (a so-called 1/4 width position and 3/4 width position) in each side in the width direction so as to be laterally symmetrical.

Here, the depth position of t/4 was defined as a stationary part with few porosity defects, and the average of the specific gravities of the samples at a depth position of t/4 was defined as $\rho_{t/4}$. In addition, for the depth position of t/2 from the surface, $\rho_{t/2}$ was obtained at each width direction position. Here, using $\rho_{t/4}$, which is the average of the specific gravities of the samples at a depth position of t/4, and $\rho_{t/2}$, which is the specific gravity of the sample at each width direction position at a depth position of t/2 from the surface, a reciprocal difference of the specific gravities at a depth position of t/2 and a depth position of t/4 from the surface was obtained based on the following formula, and used as the porosity volume at a depth position of t/2 from the surface.

Here, the largest value among the porosity volumes at a depth position of t/2 from the surface obtained at each width direction position was used as the porosity volume at a depth position of t/2 from the surface in the steel plate.

Porosity volume at a depth position of t/2 from the surface ($cm^3$/g)=$1/\rho_{t/2}$-$1/\rho_{t/4}$

<Microstructure>

Test pieces were cut out at a depth position of t/4 from the surface of the obtained steel plate, the L cross section was mirror-polished, and then finish-polished with colloidal silica for 30 minutes, and measurement was then performed using an electron backscatter diffraction (EBSD) method. The obtained data was analyzed by setting a region surrounded by high-angle grain boundaries with a crystal orientation difference of 15 degrees or more as crystal grains according to OIM (commercially available from TSL Solutions) and using the GAM value indicating the average value of the crystal orientation differences in the crystal grains, and thus an attempt was made to separate ferrite and bainite. In this case, a part with a GAM value of 0.5 or less was defined as ferrite, and the area proportion of ferrite was calculated. In addition, a part other than ferrite was defined as bainite and the remainder (MA), and the area proportion thereof was obtained.

In addition, the same position was mirror-polished and then subjected to LePera corrosion, 5 fields of view were observed under an optical microscope at a magnification of 500, a binarization process was performed by image analysis, and the area proportion of MA was obtained. Then, the area proportion of bainite was obtained by subtracting the area proportion of MA from the area proportion of bainite and the remainder (MA).

A circle equivalent diameter in a region which was surrounded by high-angle grain boundaries with 15 degrees or more and in which the GAM value was 0.5 or less was calculated according to OIM (commercially available from TSL Solutions) when the above area proportion of ferrite was calculated, and the average crystal grain size of ferrite was calculated as an average value of the circle equivalent diameters measured at observation fields of view.

<Mechanical strength>

Test pieces (round bar test piece specified in EN10002-1) were cut out at a depth position of t/4 from the surface of the obtained steel plate so that the longitudinal direction of the test piece was parallel to the width direction of the steel plate, a tensile test was performed according to EN10025, and the yield strength (YS) and the tensile strength (TS) were measured.

<Impact absorption energy>

Test pieces (test piece with a 2 mm V notch specified in EN10045-1) were cut out at a depth position of t/4 from the surface of the obtained steel plate so that the longitudinal direction of the test piece was parallel to the rolling direction, a Charpy impact test was performed according to EN10025 at a test temperature of -50°C, and the impact absorption energy vE-50 was measured.

[Table 5]

| No. | Metal structure | | | | Evaluation | | | | Note |
|---|---|---|---|---|---|---|---|---|---|
| | Ferrite area proportion (%) | Bainite area proportion (%) | Remainder (%) | Average crystal grain size of ferrite (μm) | Porosity volume × 10⁻³ (cm³/g) | TS (MPa) | YS (MPa) | vE-50 (J) | |
| 1 | 59 | 41 | 0 | 39.6 | 0.10 | 599 | 351 | 243 | |
| 2 | 56 | 44 | 0 | 38.9 | 0.09 | 443 | 412 | 233 | |
| 3 | 54 | 46 | 0 | 25.5 | 0.02 | 499 | 431 | 173 | |
| 4 | 77 | 23 | 0 | 38.6 | 0.03 | 590 | 412 | 141 | |
| 5 | 68 | 32 | 0 | 49.4 | 0.06 | 524 | 412 | 213 | |
| 6 | 56 | 44 | 0 | 34.2 | 0.17 | 582 | 413 | 189 | |
| 7 | 61 | 39 | 0 | 32.4 | 0.06 | 469 | 425 | 176 | |
| 8 | 69 | 31 | 0 | 37.5 | 0.05 | 507 | 448 | 215 | |
| 9 | 52 | 48 | 0 | 25.7 | 0.11 | 514 | 384 | 337 | |
| 10 | 75 | 25 | 0 | 28.7 | 0.11 | 569 | 456 | 56 | |
| 11 | 74 | 26 | 0 | 25.2 | 0.08 | 557 | 443 | 284 | |
| 12 | 75 | 25 | 0 | 49.2 | 0.07 | 522 | 451 | 201 | |
| 13 | 60 | 40 | 0 | 46.6 | 0.18 | 583 | 436 | 78 | |
| 14 | 69 | 31 | 0 | 26.6 | 0.11 | 563 | 410 | 345 | |
| 15 | 59 | 41 | 0 | 35.9 | 0.04 | 466 | 458 | 391 | |
| 16 | 66 | 34 | 0 | 32.7 | 0.05 | 484 | 439 | 295 | |
| 17 | 63 | 37 | 0 | 36.9 | 0.12 | 521 | 425 | 281 | |
| 18 | 53 | 47 | 0 | 42.6 | 0.09 | 583 | 389 | 198 | |
| 19 | 63 | 37 | 0 | 35.9 | 0.010 | 499 | 448 | 201 | |
| 20 | 64 | 36 | 0 | 33.7 | 0.003 | 448 | 446 | 239 | |
| 21 | 52 | 48 | 0 | 30.8 | 0.008 | 535 | 449 | 267 | |
| 22 | 61 | 39 | 0 | 49.4 | 0.006 | 504 | 419 | 236 | |
| 23 | 57 | 42.8 | 0.2 | 37.8 | 0.009 | 559 | 355 | 233 | |

[Table 6]

| No. | Metal structure | | | | Evaluation | | | | Note |
|---|---|---|---|---|---|---|---|---|---|
| | Ferrite area proportion (%) | Bainite area proportion (%) | Remainder (%) | Average crystal grain size of ferrite (μm) | Porosity volume × 10⁻³ (cm³/g) | TS (MPa) | YS (MPa) | vE-50 (J) | |
| x1 | <u>85</u> | <u>15</u> | 0 | 38.8 | 0.11 | 430 | 370 | 160 | |
| x2 | 59 | 41 | 0 | 61.1 | 0.07 | 489 | 423 | 19 | |
| x3 | 63 | 37 | 0 | 34.3 | 0.10 | 582 | 413 | 42 | |
| x4 | 63 | 37 | 0 | 25.7 | 0.02 | 432 | 342 | 216 | |

(continued)

| No. | Metal structure | | | | Evaluation | | | | Note |
| --- | --- | --- | --- | --- | --- | --- | --- | --- | --- |
| | Ferrite area proportion (%) | Bainite area proportion (%) | Remainder (%) | Average crystal grain size of ferrite ($\mu$m) | Porosity volume $\times$ $10^{-3}$ ($cm^3/g$) | TS (MPa) | YS (MPa) | vE-50 (J) | |
| x5 | 74 | 26 | 0 | 46.6 | 0.05 | 611 | 510 | 21 | |
| x6 | 53 | 47 | 0 | 27.4 | 0.11 | 521 | 408 | 36 | |
| x7 | 50 | 50 | 0 | 41.2 | 0.12 | 421 | 311 | 262 | |
| x8 | 57 | 43 | 0 | 20.7 | 0.08 | 450 | 316 | 321 | Surface cracking occurred |
| x9 | 56 | 44 | 0 | 27.3 | 0.17 | 430 | 350 | 175 | |
| x10 | 62 | 38 | 0 | 44.7 | 0.06 | 431 | 361 | 32 | |
| x11 | 71 | 29 | 0 | 37.3 | 0.03 | 421 | 362 | 220 | |
| x12 | 53 | 47 | 0 | 51.5 | 0.06 | 591 | 421 | 16 | |
| x14 | 15 | 85 | 0 | 25.9 | 0.02 | 632 | 442 | 13 | |
| x16 | 64 | 36 | 0 | 62.2 | 0.16 | 482 | 421 | 21 | |
| x20 | 31. | 69 | 0 | 27.0 | 0.16 | 615 | 452 | 32 | |
| x21 | 59 | 41 | 0 | 42.2 | 0.009 | 577 | 448 | 24 | |
| x22 | 52 | 47.7 | 0.3 | 29.2 | 0.006 | 472 | 376 | 19 | |
| x23 | 57 | 43 | 0 | 54.2 | 0.004 | 481 | 364 | 30 | |
| x24 | 35 | 65 | 0 | 61.5 | 0.009 | 596 | 445 | 17 | |
| x25 | 28 | 72 | 0 | 29.6 | 0.010 | 541 | 405 | 21 | |
| x26 | 66 | 34 | 0 | 39.0 | 0.08 | 565 | 354 | 19 | |
| x27 | 79 | 21 | 0 | 33.6 | 0.07 | 636 | 543 | 155 | |
| x28 | 74 | 26 | 0 | 26.0 | 0.06 | 449 | 406 | 24 | |
| x29 | 71 | 29 | 0 | 43.3 | 0.04 | 471 | 427 | 16 | |
| x30 | 72 | 28 | 0 | 47.4 | 0.09 | 476 | 386 | 233 | Surface cracking occurred |
| x31 | 65 | 35 | 0 | 38.7 | 0.07 | 548 | 441 | 17 | |
| x32 | 59 | 41 | 0 | 40.5 | 0.03 | 427 | 341 | 198 | |
| x33 | 67 | 33 | 0 | 40.2 | 0.08 | 470 | 440 | 23 | |
| x34 | 82 | 18 | 0 | 36.6 | 0.05 | 434 | 370 | 286 | |
| x35 | 47 | 53 | 0 | 31.3 | 0.35 | 451 | 378 | 22 | |
| x36 | 61 | 39 | 0 | 27.0 | 0.26 | 462 | 392 | 291 | |
| x37 | 81 | 19 | 0 | 39.0 | 0.36 | 421 | 423 | 261 | |
| x38 | 59 | 41 | 0 | 52.1 | 0.27 | 496 | 401 | 18 | |
| x39 | 81 | 19 | 0 | 48.0 | 0.09 | 428 | 326 | 128 | |

(continued)

| No. | Metal structure | | | | Evaluation | | | | Note |
|---|---|---|---|---|---|---|---|---|---|
| | Ferrite area proportion (%) | Bainite area proportion (%) | Remainder (%) | Average crystal grain size of ferrite (μm) | Porosity volume × $10^{-3}$ ($cm^3$/g) | TS (MPa) | YS (MPa) | vE-50 (J) | |
| x40 | <u>83</u> | <u>17</u> | 0 | 41.3 | 0.07 | 415 | 343 | 265 | |
| Underline indicates that the value is outside of the scope specified in the present invention. | | | | | | | | | |

As shown in Table 5, since the steels Nos. 1 to 23 had the chemical components within the scope of the present invention, and were steels produced using the invention of the production method of the present invention, they had predetermined structures, and exhibited excellent strength and toughness values even if the plate thickness and the plate width were increased. In addition, all the porosity volumes had low values of $0.18 \times 10^{-3}$ $cm^3$/g or less. In particular, in Nos. 19 to 23, in the continuous casting process, when reduction was performed in the end stage of solidification, the value of the porosity volume was lower.

On the other hand, as shown in Table 6, the steels No. x1 to x7, x9 to x11, x21, x22, x26 to x29, and x31 to x33 had the chemical compositions not within the scope of the present invention and were produced using the invention of the production method of the present invention, but a high strength and toughness value was not obtained. In the steel No. x8, the Cu content exceeded the scope of the present invention, the steel was produced using the invention of the production method of the present invention, a high strength and toughness value were obtained, but surface cracking occurred. In the steel No. x30, the Al content exceeded the scope of the present invention, the steel was produced using the invention of the production method of the present invention, a high strength and toughness value were obtained, but surface cracking occurred. In the steels Nos. x12 and x23, the slab heating temperature before rough rolling was high, the ferrite crystal grain size increased and the toughness decreased. The steels Nos. x14, x20, and x25 had low cooling stop temperatures, were quenched, and had large bainite area proportions, and reduced toughness.

Since the steels Nos. x16 and x24 had a high finish rolling temperature and were rolled in an austenite recrystallized region, the ferrite crystal grain size increased and the toughness decreased.

In the steel x34, cooling after finish rolling was not water cooling, and the cooling rate was slow, and thus the area proportion of ferrite became excessive, and the strength decreased.

In the steel x35, since finish rolling was performed at a temperature lower than 800°C and the shape ratio was low in the rolling condition, the porosity volume in the steel increased. In addition, finish rolling was performed at a temperature lower than 800°C, the cooling start temperature also started from lower than 800°C, and the cooling stop temperature was also low. As a result, the bainite area proportion increased and the toughness decreased.

In the steel x37, finish rolling was performed at a temperature of 800°C or lower, and the cooling start temperature also started from 800°C or lower. As a result, the area proportion of ferrite became excessive, and the strength decreased. Since the shape ratio was low in the rolling condition, the porosity volume also increased.

The steel x38 had a low shape ratio in finish rolling. As a result, the crystal grains could not be refined, the ferrite crystal grain size increased, and the toughness decreased. In addition, the porosity volume of the steel plate was large because the shape ratio was small.

In the steel No. x36, the porosity volume of the slab was large, and the porosity volume of the steel plate was also large.

In the steel No. x39, the water cooling start temperature was lower than 800°C, the area proportion of ferrite became excessive, and the strength decreased.

In the steel No. x40, the water cooling stop temperature exceeded 400°C, the area proportion of ferrite became excessive, and the strength decreased.

[Industrial Applicability]

According to the present invention, it is possible to provide a steel plate for wind power generation plants which has excellent low-temperature toughness and high strength, and has a plate thickness of 60 mm or more and a plate width of 3,000 mm or more, and a method for producing the same.

**Claims**

1. A steel plate for wind power generation plants, which has a chemical composition, in mass%,

> C: 0.05 to 0.10%,
> Si: 0.10 to 0.45%,
> Mn: 1.20 to 1.60%,
> P: 0.020% or less,
> S: 0.005% or less,
> Cu: 0.10 to 0.50%,
> Ni: 0.10 to 0.50%,
> Ti: 0.003 to 0.040%,
> Al: 0.010 to 0.060%,
> Nb: 0.010 to 0.040%,
> Cr: 0 to 0.40%,
> Mo: 0 to 0.15%,
> V: 0 to 0.15%,
> B: 0 to 0.0020%,
> Ca: 0 to 0.0100%,
> Mg: 0 to 0.0100%,
> REM: 0 to 0.0100%,
> N: 0.006% or less,
> O: 0.010% or less, and
> the remainder: Fe and impurities,
> wherein, when a plate thickness is set as t in units of mm, a microstructure at a depth position of t/4 from the surface is composed of, in area proportion,

>> ferrite: 50 to 80%,
>> bainite: 20 to 50%, and
>> other structures: 0 to 1.0%,

> wherein an average crystal grain size of the ferrite is 25.0 to 50.0 $\mu$m,
> wherein a porosity volume at a depth position of t/2 from the surface is $0.20 \times 10^{-3}$ cm$^3$/g or less, and
> wherein a plate thickness is 60 mm or more and a plate width is 3,000 mm or more.

2. The steel plate for wind power generation plants according to claim 1,
   wherein the chemical composition includes, in mass%,
   one or more selected from the group consisting of

> Cr: 0.10 to 0.40%,
> Mo: 0.02 to 0.15%,
> V: 0.02 to 0.15%,
> B: 0.0001 to 0.0020%,
> Ca: 0.0005 to 0.0100%,
> Mg: 0.0005 to 0.0100%, and
> REM: 0.0005 to 0.0100%.

3. The steel plate for wind power generation plants according to claim 1 or 2,
   wherein the tensile strength is 440 MPa or more and 599 MPa or less.

4. A method for producing the steel plate for wind power generation plants according to any one of claims 1 to 3, the method comprising:

> a continuous casting process in which a slab having a thickness of ts and a porosity volume of $1.0 \times 10^{-3}$ cm$^3$/g or less at a depth position of ts/2 from the surface is obtained by continuous casting;
> a rough rolling process in which the slab is heated to 1,020 to 1,070°C, and the heated slab is roughly rolled to obtain a rough-rolled slab;
> a finish rolling process in which the rough-rolled slab is subjected to a plurality of passes of finish rolling including one or more passes under the condition that a surface temperature is 800°C or higher in an austenite un-recrystallized region and under the condition that the shape ratio is 0.50 or more to obtain a steel plate;

a water cooling process in which the steel plate is cooled with water such that a surface temperature drops from a temperature of 800°C or higher to a temperature of 300 to 400°C; and

a cutting process in which the steel plate after the water cooling process is cut out so that a plate width is 3,000 mm or more.

5. The method for producing a steel plate for wind power generation plants according to claim 4,

wherein, in the continuous casting process, the slab containing an unsolidified part is subjected to a reduction of 3 mm or more and 30 mm or less with a solid phase ratio of the center part in a range of 0.75 or more and less than 1.0 using a reducing rolling.

## INTERNATIONAL SEARCH REPORT

International application No.

PCT/JP2021/010109

### A. CLASSIFICATION OF SUBJECT MATTER
Int.Cl. C22C38/00(2006.01)i, C21D8/02(2006.01)i, C22C38/58(2006.01)i
FI: C22C38/00301A, C22C38/58, C21D8/02B

According to International Patent Classification (IPC) or to both national classification and IPC

### B. FIELDS SEARCHED

Minimum documentation searched (classification system followed by classification symbols)
Int.Cl. C22C38/00-38/60, C21D8/02

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2013-28852 A (JFE STEEL CORPORATION) 07 February 2013 (2013-02-07) | 1-5 |
| A | JP 2007-302908 A (SUMITOMO METAL INDUSTRIES, LTD.) 22 November 2007 (2007-11-22) | 1-5 |
| A | JP 2007-296542 A (SUMITOMO METAL INDUSTRIES, LTD.) 15 November 2007 (2007-11-15) | 1-5 |
| A | JP 6-240355 A (SUMITOMO METAL INDUSTRIES, LTD.) 30 August 1994 (1994-08-30) | 1-5 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 May 2021 | 25 May 2021 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

| International application No. |
| --- |
| PCT/JP2021/010109 |

| | | |
| --- | --- | --- |
| JP 2013-28852 A | 07 February 2013 | (Family: none) |
| JP 2007-302908 A | 22 November 2007 | (Family: none) |
| JP 2007-296542 A | 15 November 2007 | (Family: none) |
| JP 6-240355 A | 30 August 1994 | (Family: none) |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020044280 A
- JP 2012122116 A
- JP 2012122117 A
- JP 2013028852 A
- JP 2013043579 A
- JP 2011246805 A
- JP 2011246807 A